# EUROPEAN PATENT APPLICATION

(11) **EP 1 378 827 A1**
(43) Date of publication of application: **07.01.2004**
(21) Application number: 02291706.6
(22) Date of filing: 05.07.2002
(51) Int. Cl.: G06F 9/44

(54) **Process for changing the language of a GUI application without exiting and re-entering the application**

(71) Applicant: ALCATEL, 75008 Paris (FR)
(72) Inventor: Mussini, Marco, 20133 Milano (IT)
(74) Representative: Lamoureux, Bernard

(57) **Abstract**

The present invention provides for a process for changing the language of a GUI application without exiting and reentering the application, which:
- Uses Metastrings rather than regular strings. Metastrings contain a language-independent description of the message, and they are able to make and return a localized version of the message in the current language.
- Replace normal widgets with internationalization-aware widgets.
- When a language switch is requested:
   - Inform Metastrings that the current language has changed;
   - Visit all widgets and require them to refresh their GUI. This will produce the localized version of the messages.

## Description

The present invention relates to a process for changing the language of a GUI application without exiting and reentering the application.

Most network management GUI (Graphic User Interface) applications are "internationalized" - i.e., designed so that it is possible to translate their messages in the language of a specific market. (This process is called "localization").

Although techniques to achieve this are well known and widely established, with current solutions there is typically only one way to change the language in which a GUI operates: exit the application, select a different language, and then restart the application. Sometimes it is even necessary to exit and re-enter the terminal session, too.

However this usually causes the loss of the GUI state, which may be not acceptable, for example, when corrective actions on critical situations are in progress.

Although in most cases exiting and re-entering the application can be acceptable (and today it is accepted indeed, since typically there is no other option), there can be occasions (for example in large network operation centers where the staff, working in shifts, includes people of several different languages) in which the need for switching the GUI language could be relatively frequent, and the side effects of exiting and re-entering a complex application and/or the session itself (particularly the loss of the GUI status, the loss of size and position of most open windows, and the need to save work) would be rather annoying. A solution with less impact on the operator's activity and time spent would be clearly preferred.

Therefore in view of the known solutions, that are not quite efficient, it is the main object of the present invention to provide a process for changing the language of a GUI application without exiting and reentering the application.

The basic idea of the present invention is to use the following strategy:
- Use Metastrings rather than regular strings. Metastrings contain a language-independent description of the message, and they are able to make and return a localized version of the message in the current language. Data for doing this is kept in external message catalog files.
- Replace normal widgets with internationalization-aware widgets (a widget is a graphic component, such as a button, a list, a text box, a menu, that can be used as an elementary building block for the GUI of an application).
- When a language switch is requested:
   - Inform Metastrings that the current language has changed;
   - Visit all widgets and require them to refresh their GUI. This will produce the localized version of the messages.

This way it is possible to change the GUI language without exiting and restarting the application. Apart from the language change, application status is not affected in any way by this operation. A one-click selection on a menu is enough.

The ability to change the language of a running application, without exiting and re-starting it, is useful in situations where for example a multi-ethnic mix of staff working in shifts is supervising a system 24 hours a day. Examples may include alternating English and Spanish language in a southwestern U.S. context, or alternating several languages in a service center for a wide multinational network such as Sea-Me-We 3.

These and further objects are achieved by means of a process as described in the attached claims, which are considered an integral part of the present description.

The invention will become fully clear from the following detailed description, given by way of a mere exemplifying and non limiting example.

The basic strategy for changing the GUI language without exiting and restarting the application is described below.
(1) All literal text data (strings) in the GUI is replaced with language-independent text data generators (metastrings). Metastrings have the property that they do not just store a fixed string literal; rather, they are able to build a (possibly compound) string value in the "current" language. The notion of "current" language can change at run time. Language-dependent literal text data components used by Metastrings to build language-dependent text strings is retrieved from external files.
(2) All widget classes (codes implementing elementary visible components of the graphical interfaces) are replaced by dynamic-Internationalization-Aware subclasses. The subclasses will operate with metastrings rather than with strings. Thus, the visible caption of the new widgets will be "current language"-dependent, and will be able to change at run time when the "current" language is changed. The new widgets can coexist with existing, traditional (fixed-language) widgets, making it possible to have a gradual shift to the new paradigm.
(3) When the "current" language is changed, all widgets are required to refresh themselves (which they will do in the new language), possibly asking for more screen space (for example because the caption text in the new language is longer). If necessary, GUI geometry is adjusted accordingly.

More specifically the method provides for:
- Using metastrings (I18NString data type) rather than regular strings (String data type). Metastrings contain a language-independent description of the message, and they are able to make and return a localized version of the message in the current language. Data for doing this is kept in external message catalog files.
- Replacing normal widgets (using String as the data value for their caption) with internationalization-aware widgets (using I18NString as the data value for their caption). Note that the same applies to the tooltip text, which is also internationalized in the same way.
- When a language switch is requested,
   - Informing I18NStrings that the current language has changed;
   - Visiting all widgets and requiring them to refresh their GUI. In this process, they will call the toString() method of the I18NString objects.

This will produce the localized version of the messages.

Message database organization: There is one message catalog for each supported language and the name is composed by a base name plus a suffix containing the language and region to which that message catalog file applies.

### Central control of language switch:

- A centralized class holds a reference to the message catalog for the current language.
- This class has a method for changing language; when this method is called, it behaves as follows:
   - close current message catalog;
   - open new message catalog;
   - visit widget hierarchy and notify all widgets that the language has changed. This will have the consequence that the widgets will repaint themselves; in this process they will query the toString() method of the I18NString specifying their caption; this will return the string in the new language, and ultimately update the language of the whole GUI.

### Logical structure of a I18NString implementation:

- In the constructor, a tag is specified. This tag will be used for a lookup in an external file containing a catalog of messages in tag-message pairs.
- The toString() method of the I18NString behaves as follows:
   - obtains a reference to the current message catalog;
   - looks up the tag in the message catalog and retrieves the string in the current language, then returns it.

In the following specific examples of embodiment of the GUI application are given in a non limiting sense.

### Typical methods in internationalized widget classes:

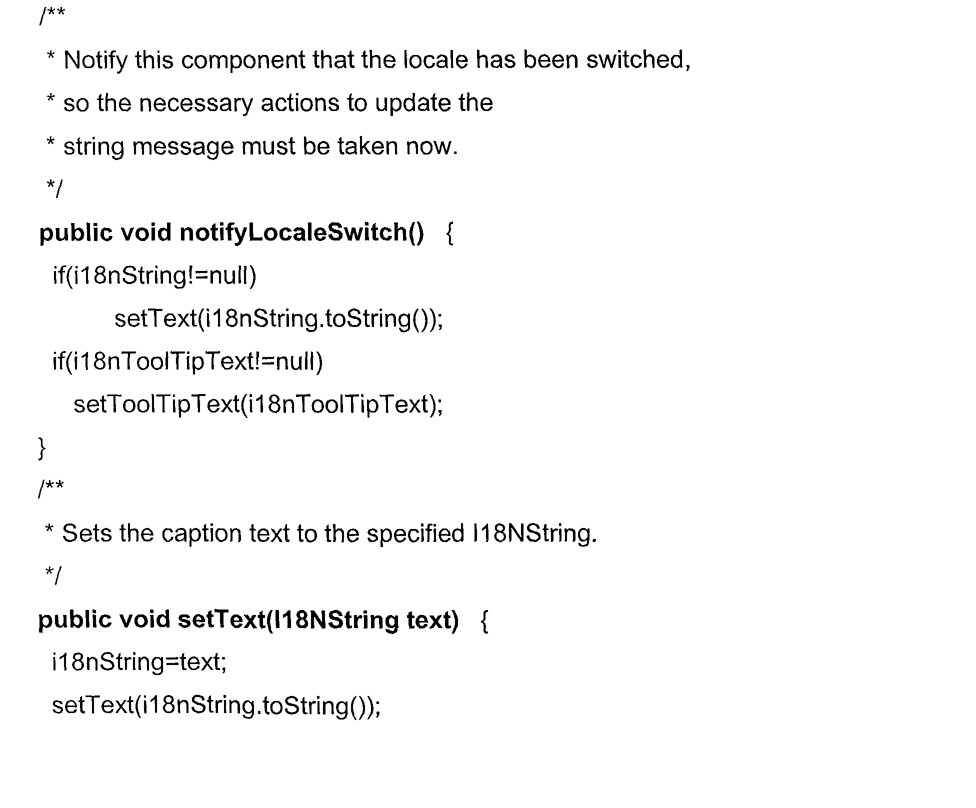

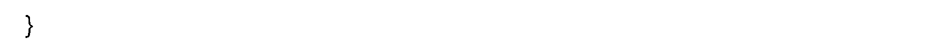

### Typical method of the centralized I18N language switch driver:

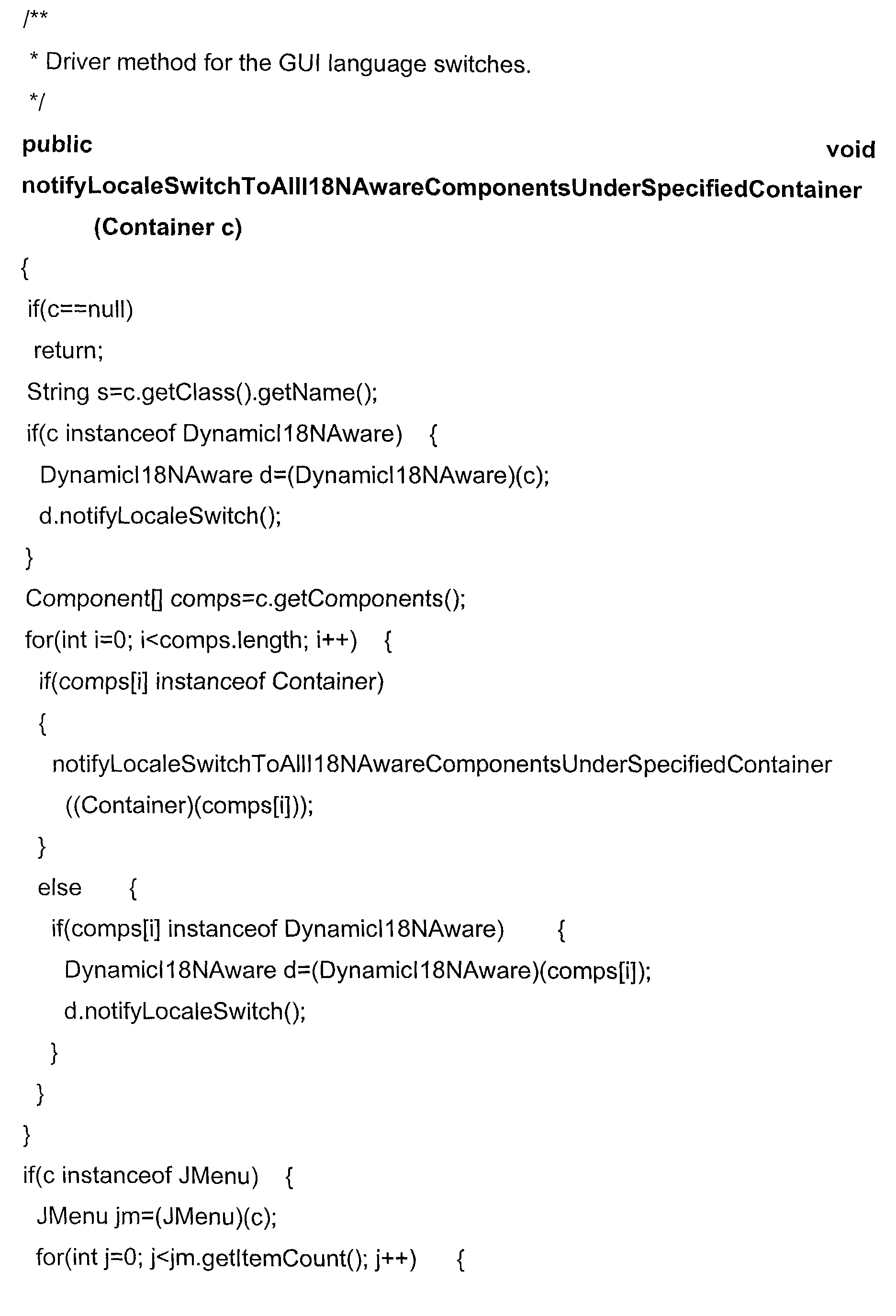

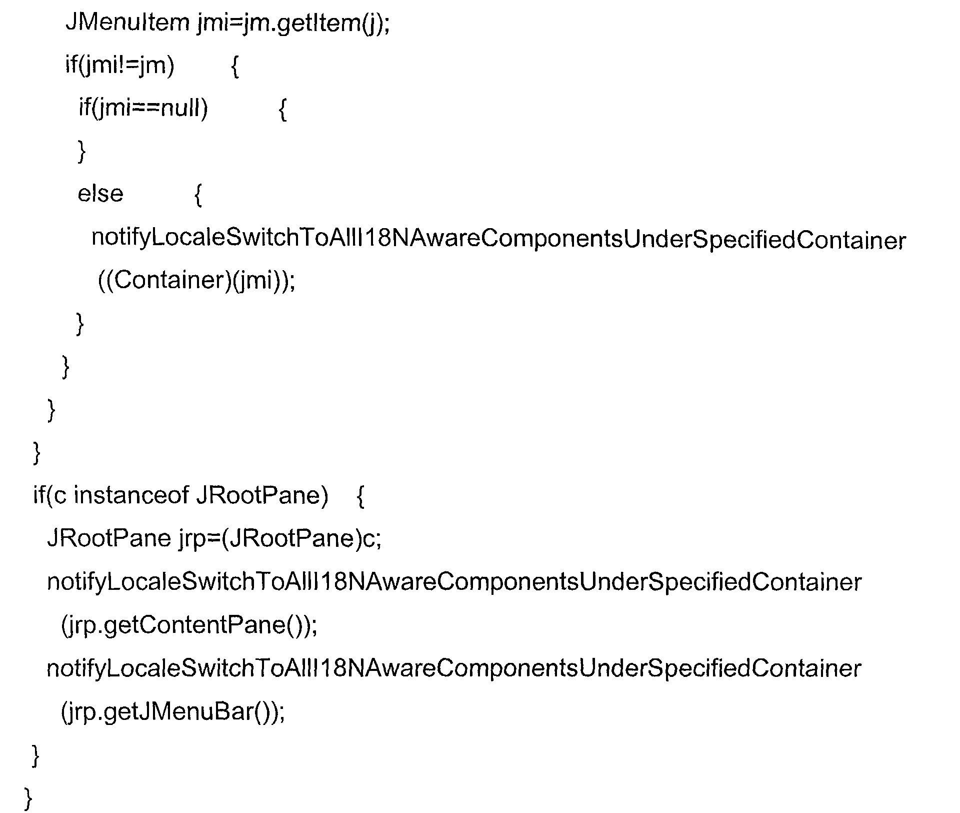

Further implementation details will not be described, as the man skilled in the art is able to carry out the invention starting from the teaching of the above description.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Process for changing the language of a GUI application without exiting and re-entering the application, **characterized in that** it comprises the following steps:
- all literal text data strings in the GUI application is replaced with language-dependent text data generators Metastrings;
- all widget classes are replaced by dynamic-lnternationalization-Aware widgets operating with said metastrings;
- when a language change is requested, said Metastrings are informed that the current language has changed; all the dynamic-Internationalization-Aware widgets are required to refresh their GUI, so that the visible caption of the the dynamic-Internationalization-Aware widgets will be language dependent.

2. Process as in claim 1, **characterized in that** said Metastrings contain a language-independent description of the message, and they are able to make and return a localized version of the message in the current language, and **in that** data for doing this is kept in a message catalog file.

3. Process as in claim 2, **characterized in that** there is one message catalog file for each supported language and the language name is composed by a base name plus a suffix containing the language and region to which that message catalog file applies.

4. Process as in claim 3, **characterized in that** a centralized class holds a reference to the message catalog file for the current language; the centralized class has a method for changing language; when this method is called by the application, it:
- closes the current message catalog file;
- opens new message catalog;
- visits the dynamic-Internationalization-Aware widget hierarchy and notify all of them that the language has changed, with the consequence that the dynamic-Internationalization-Aware widgets will repaint themselves.

5. Process as in claim 4, **characterized in that** the internationalization-aware widgets use I18NString objects as the data value for their caption, and **in that** when a language switch is requested, the I18NString objects are informed that the current language has changed, and all widgets are required to refresh their GUI, namely to call a toString() method of the I18NString objects, specifying their caption; this will return a string in the new language, and ultimately update the language of the whole GUlthus producing the localized version of the messages.

6. Computer program comprising computer program code means adapted to perform all the steps of claims 1 to 5 when said program is run on a computer.

7. A computer readable medium having a program recorded thereon, said computer readable medium comprising computer program code means adapted to perform all the steps of claims 1 to 5 when said program is run on a computer.
